# EUROPÄISCHE PATENTSCHRIFT

(11) **EP 2 095 496 B1**
(45) Veröffentlichungstag und Bekanntmachung des Hinweises auf die Patenterteilung: **29.08.2012**
(21) Anmeldenummer: 06819820.9
(22) Anmeldetag: 28.11.2006
(51) Int. Cl.: H02P 3/14, H02P 6/24, H02M 5/458

(54) **AKTIV-BREMSEINHEIT**
ACTIVE BRAKE UNIT
UNITÉ DE FREINAGE ACTIF

(43) Veröffentlichungstag der Anmeldung: 02.09.2009
(73) Patentinhaber: Baumüller Nürnberg GmbH, 90482 Nürnberg (DE)
(72) Erfinder: CHANG, Qian, 90473 Nürnberg (DE)
(74) Vertreter: Götz, Georg Alois
(86) Internationale Anmeldenummer: PCT/EP2006/068998
(87) Internationale Veröffentlichungsnummer: WO 2008/064716

(56) Entgegenhaltungen:
- EP-A1- 0 026 038
- DE-A1- 19 509 827
- JP-A- 58 116 095
- JP-A- 59 017 880

## Beschreibung

Die Erfindung betrifft eine Schaltungsanordnung zum Rückspeisen von beim Bremsen von elektrischen Motoren entstehender Energie in ein Versorgungsnetz. Bevorzugte Anwendungsgebiete derartiger Einrichtungen sind die Antriebe von Werkzeug-, Textil-, Druck- und anderer Maschinen, für die ein häufiges Anfahren und Abbremsen charakteristisch ist.

Rückspeiseeinrichtungen für beim Abbremsen elektrischer Motoren entstehende Energie sind bekannt. Eine solche Einrichtung ist beschrieben im Dokument DE 19509827 und im "Unidrive Regen Installation Guide, Issue No. 2" auf der website http://www.controltechniques.com. Es handelt sich um eine Anpassung geregelter Gleichstromversorgungen an andere Antriebe. Die Einrichtung besteht aus einem Netzanschlusszweig, der aus einer am Versorgungsnetz angeschlossenen spannungsgesteuerten Widerstandsschaltung und einem HF-Filter gebildet ist, einem Vorwärtszweig und einem Rückwärtszweig. An den Vorwärtszweig ist ausgangsseitig ein Elektromotor angeschlossen. Der Vorwärtszweig umfasst Gleichrichter, Zwischenkreis und Wechselrichter. Die Ausgangsklemmen des Zwischenkreises sind ferner über eine Sperrdiode mit dem Rückwärtszweig verbunden, der einen zweiten Wechselrichter und eine über eine Drossel je Phase angeschlossene Anpassungsschaltung mit Netzfilter sowie einen Trenntransformator umfasst, der mit dem Netzanschlusszweig verbunden ist. Der Trenntransformator bewirkt die galvanische Trennung des Rückwärtszweiges vom Versorgungsnetz, so dass die Entstehung von hohen Kreisströmen vermieden wird. Der Trenntransformator aber hat ein relativ großes Volumen und stellt einen großen Kostenfaktor dar.

Es ist daher Aufgabe der Erfindung, die Einspeisung von beim Bremsen von elektrischen Motoren gewinnbarer Energie in das Versorgungsnetz unter Vermeidung eines Trenntransformators zu realisieren.

Gelöst wird die Aufgabe durch eine Aktiv-Bremseinheit mit den Merkmalen des Patentanspruchs 1, indem ein Vorwärtszweig und ein Rückwärtszweig mit dem Versorgungsnetz verbunden sind. Der Vorwärtszweig besteht aus einem an das Versorgungsnetz angeschlossenen Gleichrichter, der über einen ersten Zwischenkreis an einen ersten, mit dem Motor verbundenen Wechselrichter geführt ist. Der Rückwärtszweig umfasst einen am Ausgang des ersten Zwischenkreises angeschlossenen zweiten Zwischenkreis, an den ein zweiter Wechselrichter angeschlossen ist, wobei jeder Pol des zweiten Zwischenkreises über eine Reihenschaltung einer stromkompensierten Drossel und einer Diode an den Ausgang des ersten Zwischenkreises angeschlossen ist. Der Rückwärtszweig ist über eine Netzanpassungsschaltung mit dem Versorgungsnetz verbunden.

Eine vorteilhafte Weiterbildung der Erfindung ist im Unteranspruch dargelegt, indem die Ausgangsspannung des zweiten Wechselrichters nach der Spannung über dem zweiten Zwischenkreis geregelt wird. Im Lastbetrieb ist der Motor an das Versorgungsnetz angeschlossen und bildet derart eine Stromsenke, wobei mittels des Vorwärtskreises Drehzahl und Drehmoment eingestellt werden. Im Bremsbetrieb kommt es zu einem Anstieg der ersten Zwischenkreisspannung, da einerseits der Stromfluss zum Motor eingestellt und andererseits ein Rückstrom vom Motor generiert wird. Der Rückstrom kann vorteilhaft durch die Verwendung eines Wechselrichters in den Zwischenkreis rückgeführt werden, der aus Insulated Gate Bipolar Transistores (IGBTs) besteht, deren Emitter und Kollektoren über Freilaufdioden verbunden sind. Erfindungsgemäß begrenzen die stromkompensierten Drosseln den aufgrund des Spannungsanstiegs am ersten Zwischenkreis in den Rückwärtszweig fließenden Strom und Stromanstieg. Die am zweiten Zwischenkreis entstehende Spannung wird mittels des geregelten zweiten Wechselrichters eingestellt. Dabei verhindern die Sperrdioden zunächst eine Entladung des ersten Zwischenkreises über die zu ihnen in Reihe liegenden stromkompensierten Drosseln, bis eine Durchlass-Schwelle der Dioden aufgrund der im Bremsbetrieb entstehenden Spannungsdifferenz zwischen dem ersten und dem zweiten Zwischenkreis überschritten wird. Mittels des vorzugsweise geregelten zweiten Wechselrichters wird die dann in den zweiten Zwischenkreis geflossene und gespeicherte Energie über die Netzanpassungsschaltung in das Versorgungsnetz zurückgespeist. Der Rückwärtszweig arbeitet dabei als Hochsetzsteller, wodurch eine Anpassung und Ausregelung der aus der Bremsenergie gewonnenen Spannung bezüglich der Spannung des Versorgungsnetzes erfolgt. Zur Erzeugung des sinusförmigen Stromes wird der zweite Wechselrichter mit pulsweitenmodulierten (PWM-) Signalen angesteuert, so dass die Oberschwingungen minimiert werden.

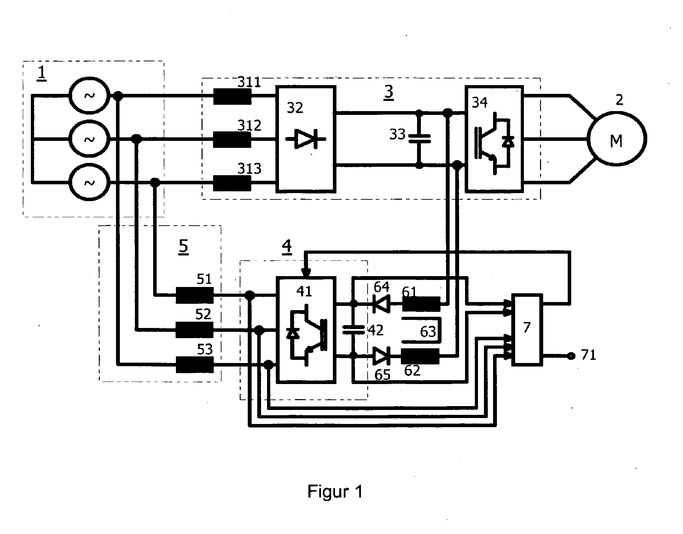

Die Erfindung wird nachstehend in Form eines bevorzugten Ausführungsbeispiels anhand der beiliegenden Zeichnung näher erläutert. Die Zeichnung zeigt
ein Prinzipschaltbild einer erfindungsgemäßen Aktiv-Bremseinheit.

An ein 3-Phasen-Netz 1 ist über einen Vorwärtszweig 3 ein Motor 2 angeschlossen. Der Vorwärtszweig 3 umfasst eine Kommutierungsspule oder -drossel 311, 312, 313 je Phase, die an einen Gleichrichter 32 geführt sind. Als Gleichrichterelemente können Dioden oder Thyristoren verwendet werden. Der Gleichrichter 32 ist über einen ersten Zwischenkreis 33 mit einem schematisch dargestellten ersten 3-Phasen-Wechselrichter 34 verbunden, dessen Schaltelemente als Insulated Gate Bipolar Transistors (IGBT) mit parallel zu den Emitter-Kollektor-Strecken geschalteten Freilaufdioden ausgebildet sind. An die Ausgänge des ersten Wechselrichters 34 ist der Motor 2 angeschlossen. Zur Rückführung der beim Bremsen des Motors 2 entstehenden Bremsenergie ist ein Rückwärtszweig 4 vorgesehen, dessen Ausgänge an das 3-Phasen-Netz 1 geführt sind. Der Rückwärtszweig 4 ist über zwei über einen gemeinsamen Kern 63 magnetisch gekoppelte, gegenläufig gewickelte und so als stromkompensierte Drosseln arbeitende Spulen 61, 62 und zu diesen in Reihe und in Bezug auf die Anschlüsse am ersten Zwischenkreis 33 in Durchlassrichtung geschaltete Dioden 64, 65 an den Ausgang des ersten Zwischenkreises 33 angeschlossen. Der Rückwärtszweig 4 besteht aus einem zweiten Zwischenkreis 42 und einem zweiten Wechselrichter 41, welcher mit dem ersten Wechselrichter 34 baugleich ist. Parallel zu dem zweiten Zwischenkreis 42 ist ein Regler 7 geschaltet, dessen Ausgang mit den Gate-Anschlüssen der Insulated Gate Bipolar Transistors (IGBT) des zweiten Wechselrichters 41 verbunden ist. Die vom Regler 7 erfasste Zwischenkreisspannung am zweiten Zwischenkreis 42 wird auf einen am Eingang 71 eingestellten Sollwert geregelt. Zu diesem Zweck kann nach einer weiteren optionalen Erfindungsausbildung alternativ oder zusätzlich auch eine Rückführung der drei Ausgangsphasenströme des zweiten Wechselrichters 41 (die zu HF-Drosseln 51, 52, 53 geleitet sind) zu entsprechenden Eingängen des Reglers 7 vorgesehen sein, wie zeichnerisch angedeutet. Die Ausgangsklemmen des zweiten Wechselrichters 41 sind über eine Netzanpassungsschaltung 5, die je Phase aus der Reihenschaltung einer HF-Drossel 51, 52, 53 besteht, an das 3-Phasen-Netz 1 angeschlossen. Wird der Motor 2 abgebremst, kommt es zu einem Anstieg der ersten Zwischenkreisspannung, da einerseits der Stromfluss zum Motor 2 eingestellt und andererseits ein Rückstrom vom Motor 2 generiert wird. Der Rückstrom wird in den ersten Zwischenkreis 33 rückgeführt. Die stromkompensierten Drosseln 61, 62 begrenzen den aufgrund des Spannungsanstiegs am ersten Zwischenkreis 33 in den Rückwärtszweig 4 fließenden Strom nebst entsprechenden Stromanstieg (zur Funktionsweise siehe noch unten). Die am zweiten Zwischenkreis 42 entstehende Spannung wird mittels des geregelten zweiten Wechselrichters 41 eingestellt. Dabei verhindern die Sperrdioden 64, 65 eine Entladung des zweiten Zwischenkreises 42 über die zu ihnen in Reihe liegenden stromkompensierten Drosseln 61, 62, so dass die im zweiten Zwischenkreis 42 gespeicherte Energie über den zweiten Wechselrichter 41 und die Netzanpassungsschaltung 5 in das 3-Phasen-Netz 1 eingespeist wird. Der Rückwärtszweig 4 arbeitet als Hochsetzsteller, wodurch eine Anpassung und Ausregelung der aus der Bremsenergie gewonnenen Spannung bezüglich der Spannung des 3-Phasen-Netzes 1 erfolgt. Zur Erzeugung des sinusförmigen Stromes wird der zweite Wechselrichter 41 mit pulsweitenmodulierten (PWM) Signalen angesteuert, so dass die ausgangsseitigen Oberschwingungen minimiert werden.

Am Kondensator des ersten Zwischenkreises 33 bzw. am Ausgang des Gleichrichters 32 liegt eine Spannung an, die das etwa 1,35-fache der Netzspannung (Effektivwert) beträgt. Es ist an sich bekannt, dass bei der sinusförmigen Netzspannung die Amplitude das √2-fache der Netz-Effektivspannung beträgt. √2 ist ungefähr 1,4, und in der Praxis hat sich der Wert 1,35 bewährt, weil er dem Mittelwert angenähert ist, den die Ausgangsspannung aus dem Gleichrichter mit Rest-Welligkeit hat. Die zweite Zwischenkreisspannung am Kondensator des zweiten Zwischenkreises 42 wird durch den Regler 7 geregelt. Die Hochsetzstellung findet von den HF-Drosseln 51, 52, 53 zum zweiten Zwischenkreis 42 statt. Deshalb ist die zweite Zwischenkreisspannung höher als die Spannung am ersten Zwischenkreis 33. Befindet sich der Motor 2 im Antriebszustand, dann wird aus dem Netz 1 Energie über den Gleichrichter 32, den ersten Zwischenkreis 33 und den ersten Wechselrichter 34 in den Motor gespeist. Wegen der Sperrdioden 64, 65 ist gleichzeitig der zweite Zwischenkreis vom ersten Zwischenkreis insoweit entkoppelt. Gerät der Motor 2 in den Bremszustand, dann wird zunächst die entstehende Bremsenergie über den ersten Wechselrichter 34 in den ersten Zwischenkreis 33 rückgespeist. Damit steigt die Zwischenkreisspannung des ersten Zwischenkreises 33. Sobald die Spannung im ersten Zwischenkreis 33 größer wird als im zweiten Zwischenkreis 42, schalten die beiden Sperrdioden in Richtung zum zweiten Wechselrichter 41 durch. Damit ist es möglich, dass die zunächst im ersten Zwischenkreis 33 gespeicherte Bremsenergie über die beiden Sperrdioden 64, 65 und den zweiten Wechselrichter und über die HF-Drosseln 51, 52, 53 in das Netz zurückgespeist wird. Wird im ersten Zwischenkreis 33 aufgrund der rückfließenden Bremsenergie die Spannung höher als das 1,35-fache der Netzspannung, dann sperrt der Gleichrichter 32 den ersten Zwischenkreis 33 vom Netz 1 ab. Es findet so eine elektrische Trennung statt. Es schalten dann die Sperrdioden 64, 65 zum zweiten Zwischenkreis 42 durch.

Zahlenbeispiel: Von der Netzspannung wird eine Effektivspannung von 400 Volt geliefert. Damit beträgt im ersten Zwischenkreis 33 am dortigen Kondensator die Spannung das 1,35-fache, das ist etwa 540 Volt. Am Reglereingang 71 wird der Sollwert auf beispielsweise 600 Volt eingestellt. Erst wenn im ersten Zwischenkreis 33 diese 600 Volt aufgrund rückfließender Bremsenergie überschritten werden, schalten die Sperrdioden 64, 65 durch und geben den Rückfluss von Bremsenergie über den Rückwärtszweig 4 frei.

### Bezugszeichen liste

- 1: 3-Phasen-Netz
- 2: Motor
- 3: Vorwärtszweig
- 311, 312, 313: Kommutierungsdrosseln
- 32: Gleichrichter
- 33: erster Zwischenkreis
- 34: erster IGBT-Wechselrichter
- 4: Rückwärtszweig
- 41: zweiter IGBT-Wechselrichter
- 42: zweiter Zwischenkreis
- 5: Netzanpassungsschaltung
- 51, 52, 53: HF-Drosseln
- 61,62: stromkompensierte Drosseln
- 63: gemeinsamer Spulenkern
- 64, 65: Sperrdioden
- 7: Reg ler
- 71: Sollwerteingang

## Patentansprüche

1. Aktiv-Bremseinheit zum Rückspeisen von beim Bremsen von elektrischen Motoren (2) entstehender Energie in ein Versorgungsnetz (1) mit einem Vorwärtszweig (3), bestehend aus einem an das Versorgungsnetz (1) angeschlossenen Gleichrichter (32), der über einen ersten Zwischenkreis (33) an einen ersten, mit dem Motor (2) verbundenen Wechselrichter (34) geführt ist, und einem Rückwärtszweig (4), bestehend aus einem am Ausgang des ersten Zwischenkreises (33) angeschlossenen zweiten Zwischenkreis (42), an den ein zweiter Wechselrichter (41) angeschlossen ist, der über eine Netzanpassungsschaltung (5) und/oder sonstige Netzkopplungsmittel mit dem Versorgungsnetz (1) verbunden ist, **dadurch gekennzeichnet, dass** jeder Pol des zweiten Zwischenkreises (42) über eine Reihenschaltung einer stromkompensierten Drossel (61, 62) und einer Diode (64, 65) an den Ausgang des ersten Zwischenkreises (33) angeschlossen ist.

2. Aktiv-Bremseinheit nach Anspruch 1, **gekennzeichnet durch** eine Auslegung oder Dimensionierung derart, dass im Antriebszustand des Motors die Spannung des zweiten Zwischenkreises (41) größer als die des ersten Zwischenkreises (33) ist.

3. Aktiv-Bremseinheit nach Anspruch 1 oder 2, **dadurch gekennzeichnet, dass** die Ausgangsspannung des zweiten Wechselrichters (41) nach der Spannung über dem zweiten Zwischenkreis (42) geregelt wird.

4. Aktiv-Bremseinheit nach Anspruch 1, 2 oder 3, **dadurch gekennzeichnet, dass** die Ausgangsspannung des zweiten Wechselrichters (41) nach dem oder den Ausgangsströmen des zweiten Wechselrichters (41) geregelt wird.

5. Aktiv-Bremseinheit nach Anspruch 3 oder 4, **dadurch gekennzeichnet, dass** der entsprechende Regler (7) einen Eingang (71) aufweist, der mit einem Sollwert gespeist ist, der eine Spannung des zweiten Zwischenkreises (42) ergibt, die im Antriebszustand des Motors höher als die des ersten Zwischenkreises (33) ist.

6. Aktiv-Bremseinheit nach Anspruch 5, **gekennzeichnet durch** eine Einstellbarkeit am Sollwert-Eingang, beispielsweise mittels Potentiometer..

7. Aktiv-Bremseinheit nach einem der vorangehenden Ansprüche, **dadurch gekennzeichnet, dass** der zweite Zwischenkreis (42) mit einem Zwischenkreiskondensator realisiert ist, der über die stromkompensierten Drosseln (61, 62) und die Sperr-Dioden (64, 65) mit dem ersten Zwischenkreis gekoppelt ist.

## Claims

1. Active braking unit for recirculating energy that is produced during the braking of electric motors (2) to a supply system (1) with a forward branch (3), comprising a rectifier (32) that is attached to the supply system (1), said rectifier being guided via a first intermediate circuit (33) to a first inverter (34), which is connected to the motor (2), and a reverse branch (4), comprising a second intermediate circuit (42), which is connected to the output of the first intermediate circuit (33) and has a second inverter (41) connected to it, which second inverter is connected via a system adapting circuit (5) and/or other system coupling means to the supply system (1), **characterized In that** each pole of the second intermediate circuit (42) is connected to the output of the first intermediate circuit (33) via a series connection of a current-compensated choke (61, 62) and a diode (64, 65).

2. Active braking unit according to Claim 1, **characterized by** a configuration or dimensioning such that when the motor is in driving status, the voltage of the second intermediate circuit (41) is greater than that of the first intermediate circuit (33).

3. Active braking unit according to Claim 1 or 2, **characterized in that** the output voltage of the second inverter (41) is controlled based upon the voltage via the second intermediate circuit (42).

4. Active braking unit according to Claim 1, 2 or 3, **characterized in that** the output voltage of the second inverter (41) is controlled based upon the output current or currents of the second inverter (41).

5. Active braking unit according to Claim 3 or 4, **characterized in that** the corresponding controller (7) has an input (71), which is supplied with a setpoint value, which provides a voltage of the second intermediate circuit (42) that is higher than that of the first intermediate circuit (33) when the motor is in driving status.

6. Active braking unit according to Claim 5, **characterized by** an adjustability at the setpoint value input, for example via a potentiometer.

7. Active braking unit according to any one of the preceding claims, **characterized in that** the second intermediate circuit (42) is implemented using an intermediate circuit capacitor, which is coupled to the first intermediate circuit via the current-compensated chokes (61, 62) and the blocking diodes (64, 65).

## Revendications

1. Unité de freinage actif pour le renvoi d'énergie libérée lors du freinage de moteurs électriques (2) dans un réseau d'alimentation (1), comprenant une branche en sens direct (3), constituée d'un redresseur (32) raccordé au réseau d'alimentation (1), qui est conduit via un premier circuit intermédiaire (33) à un premier onduleur (34) relié au moteur (2), et comprenant une branche inverse (4), constituée d'un deuxième circuit intermédiaire (42) raccordé à la sortie du premier circuit intermédiaire (33) auquel est raccordé un deuxième onduleur (41) qui est relié au réseau d'alimentation (1) via un circuit d'adaptation de réseau (5) et/ou d'autres moyens de couplage de réseau, **caractérisée en ce que** chaque pôle du deuxième circuit intermédiaire (42) est raccordé à la sortie du premier circuit intermédiaire (33) via un montage en série d'une self (61, 62) à courant compensé et d'une diode (64, 65).

2. Unité de freinage actif selon la revendication 1, **caractérisée par** une conception ou un dimensionnement tel que dans l'état d'attaque du moteur, la tension du deuxième circuit intermédiaire (41) est supérieure à celle du premier circuit intermédiaire (33).

3. Unité de freinage actif selon la revendication 1 ou 2, **caractérisée en ce que** la tension de sortie du deuxième onduleur (41) est régulée selon la tension sur le deuxième circuit intermédiaire (42).

4. Unité de freinage actif selon la revendication 1, 2 ou 3, **caractérisée en ce que** la tension de sortie du deuxième onduleur (41) est régulée selon le ou les courant(s) de sortie du deuxième onduleur (41).

5. Unité de freinage actif selon la revendication 3 ou 4, **caractérisée en ce que** le régulateur (7) correspondant comporte une entrée (71) qui est alimentée avec une valeur de consigne qui fournit une tension du deuxième circuit intermédiaire (42), laquelle, dans l'état d'attaque du moteur, est supérieure à celle du premier circuit intermédiaire (33).

6. Unité de freinage actif selon la revendication 5, **caractérisée par** une possibilité de réglage à l'entrée de consigne, par exemple au moyen de potentiomètres.

7. Unité de freinage actif selon l'une des revendications précédentes, **caractérisée en ce que** le deuxième circuit intermédiaire (42) est réalisé avec un condensateur de circuit intermédiaire qui est couplé au premier circuit intermédiaire via les selfs (61, 62) à courant compensé et les diodes de blocage (64, 65).
